# EUROPÄISCHE PATENTANMELDUNG

(11) **EP 0 704 161 A2**
(43) Veröffentlichungstag der Anmeldung: **03.04.1996**
(21) Anmeldenummer: 95108700.6
(22) Anmeldetag: 07.06.1995
(51) Int. Cl.: A23B 7/00, A23B 7/04, A23L 3/015

(54) **Entkeimung von pflanzlichen Produkten**

(30) Priorität: 12.07.1994 DE 4424430
(71) Anmelder: SAUERSTOFFWERK FRIEDRICH GUTTROFF GMBH, D-97877 Wertheim (DE)
(72) Erfinder: Tallafus, Ottmar, D-74722 Buchen (DE)
(74) Vertreter: Trappenberg, Hans

(57) **Zusammenfassung**

Ein Verfahren zum Entkeimen von pflanzlichen Produkten ist dadurch gekennzeichnet, daß die Produkte für etwa eine halbe Minute bis drei Minuten schwebend beziehungsweise durcheinander wirbelnd in einen Gasstrom eingebracht werden, dessen Temperatur etwa 80 bis 170°C beträgt. Die Produkte werden anschließend sekundenschnell auf Raumtemperatur oder kälter abgekühlt. Eine Vorrichtung zur Durchführung des Verfahrens weist einen Behälter 1 auf, welcher wenigstens eine am unteren Ende angeordnete Gas-Einlaßöffnung 2 und wenigstens eine am oberen Ende angeordnete Gas-Auslaßöffnung 3 hat. Oberhalb der Gas-Auslaßöffnung 3 ist eine Produkt-Einlaßöffnung angeordnet, welche mittels eines Einlaßschiebers 4 verschließbar ist. Unterhalb der Gas-Einlaßöffnung 2 ist eine Produkt-Auslaßöffnung angeordnet, welche mittels eines Auslaßschiebers 5 verschließbar ist. Die Produkt-Auslaßöffnung ist mit einem Schrägförderer 6 verbunden, welcher im unteren Trogbereich ein Kühlbad 7 hat.

## Beschreibung

Die Erfindung betrifft ein Verfahren zum Entkeimen von pflanzlichen Produkten und eine Vorrichtung zur Durchführung des Verfahrens.

Durch die heutige Struktur bei der Versorgung der Bevölkerung mit pflanzlichen Produkten vergeht oftmals eine längere Zeit von der Erzeugung bis die pflanzlichen Produkte über den Verarbeiter zum Endverbraucher gelangen. Während dieser Zeit vermehren sich die naturgemäß bei pflanzlichen Produkten vorhandenen Bakterien. Übersteigt die Gesamtzahl der Bakterien (GKZ-KBE pro Gramm) eine vorbestimmte Zahl, so ist das pflanzliche Produkt ungenießbar. Zwar kann durch Kühlung der pflanzlichen Produkte die Vermehrung der aeroben Bakterien gebremst werden. Jedoch kann durch Kühlung ein vorhandener Bakterienstamm nicht reduziert werden.

Eine Verlängerung der Haltbarkeit kann dadurch erreicht werden, daß die Anzahl der Bakterien durch Abtötung des größten Teil der Bakterien reduziert wird. Bekannte Verfahren zur Entkeimung von pflanzlichen Produkten arbeiten alle mit hochtoxischen Gasen, wie beispielsweise Ethylen-Oxid (EO). Der MAK(maximale Arbeitsplatzkonzentration)-Wert beträgt dabei etwa 1ppm. Die Verwendung von toxischen Gasen ist sehr nachteilig, da bei der Behandlung schädliche Rückstände bei den pflanzlichen Produkten hinterlassen werden. Diese Rückstände gelangen durch den Verzehr der pflanzlichen Produkte in den Körper des Menschen. Darüber hinaus gelangen die toxischen Gase in die Umwelt, wodurch sich eine starke Umweltbelastung ergibt. Darüber hinaus müssen die Produkte einer Behandlungsdauer von vielen Stunden bis mehreren Tagen unterworfen werden, damit gewünschte Ergebnisse erzielt werden können.

Des weiteren ist es bekannt, pflanzliche Produkte zu bestrahlen und dadurch aerobe Bakterien abzutöten. Da bisher noch keine Erkenntnisse darüber vorliegen, inwieweit sich eine Bestrahlung der pflanzlichen Produkte schädlich für den Menschen auswirkt und gesicherte Ergebnisse frühestens nach einigen Jahrzehnten vorliegen können, ist die Bestrahlung von pflanzlichen Produkten kein geeignetes Verfahren zur Entkeimung. Die Bestrahlung von pflanzlichen Produkten ist in einigen Ländern sogar durch Gesetz verboten.

Es ist Aufgabe der Erfindung eine Möglichkeit aufzuzeigen, mittels der die Anzahl der aeroben Bakterien bei pflanzlichen Produkten in kurzer Zeit stark reduziert werden kann.

Die Lösung dieser Aufgabe ergibt sich aus den Merkmalen des kennzeichnenden Teils des Anspruchs 1 und 9. Vorteilhafte Weiterbildungen der Erfindung ergeben sich aus den Unteransprüchen.

Gemäß der Erfindung werden die Produkte, welche insbesondere alle getrockneten Lebensmittel wie beispielsweise Gewürze, Tee, Kaffee, Kakao und Heilkräuter sein können, für etwa eine halbe Minute bis drei Minuten in einen Gasstrom eingebracht, dessen Temperatur etwa 80 bis 170°C beträgt. Vorteilhafterweise besteht der Gasstrom aus Heißluft oder einem Inert-Gas. Durch die Einbringung der Produkte in den Gasstrom strömt das Gas an der Oberfläche der Produkte vorbei. Hierdurch wird die Oberfläche der Produkte schnell erwärmt, ohne daß das gesamte Produkt die Temperatur annimmt. Durch den Gasstrom werden von der Oberfläche der Produkte sich dort befindliche Fremdkörper entfernt.

Die Behandlungsdauer der Produkte mit dem heißen Gasstrom beträgt je nach Produkt etwa zwischen einer halben Minute bis fünf Minuten. Je heißer das Gas ist, desto kürzer ist die Behandlungszeit. Die Temperatur des Gases wird entsprechend dem zu behandelnden Produkt gewählt. So hat sich bei Trockenzwiebeln eine Temperatur von 98 bis 102°C als vorteilhaft erwiesen, wobei eine Behandlungszeit von 50 Sekunden ausreichte, um eine Reduktion der aeroben Bakterienstämme um 90 % zu erreichen. Bei Pfeffer wurde mit einer Temperatur von 120 bis 135°C und einer Behandlungsdauer von 120 Sekunden ebenfalls eine Reduktion der aeroben Bakterienstämme um 90 % erreicht. Bei Petersilie wurde dasselbe Ergebnis bei einer Temperatur von 105 bis 135°C und einer Behandlungsdauer von 180 Sekunden erreicht. Bei Himbeerblättern wurde eine Reduktion der aeroben Bakterienstämme um 90 % bei einer Gastemperatur von 105°C und einer Behandlungsdauer von 120 Sekunden erreicht.

Nach der Behandlung der Produkte mit einem heißen Gasstrom werden die Produkte gemäß der Erfindung auf Raumtemperatur oder kälter abgekühlt. Die Abkühlung der Produkte geschieht in vorteilhafter Weise mittels eines cryogenen Kühlbads. Die Verweildauer der Produkte in dem Kühlbad hängt von der Temperatur des Kühlbads ab und liegt etwa zwischen 3 und 30 Sekunden. Bei Verwendung von flüssigem Stickstoff wurden mit einer Verweildauer von 5 Sekunden sehr gute Ergebnisse erzielt, bei der Verwendung von flüssigem Kohlendioxid wurden mit einer Verweildauer von 20 Sekunden sehr gute Ergebnisse erzielt. Nach dem Eintauchen in das Kühlbad hat sich die Oberfläche der Produkte auf Raumtepratur abgekühlt. Die Verweildauer kann jedoch je nach zu behandelnden Produkten unterschiedlich sein.

Neben der Reduzierung der aeroben Bakterienstämme um 90 % wurden Escherichia-, Coli- und Enterobakterien, insbesondere Salmonellen, sowie Schimmelpilze und Hefepilze vollständig vernichtet. Das heißt, nach Anwendung des erfindungsgemäßen Verfahrens befanden sich an den Produkten keine der letztgenannten Bakterien sowie Pilze mehr, wobei im unbehandelten Zustand eine Anzahl von 10³ bis 10⁴ KBE/g (keimfähige Bakterieneinheiten pro Gramm) vorlag.

In vorteilhafter Weise werden die Produkte so in den Gasstrom eingebracht, daß sie sich freischwebend darin befinden. Hierdurch wird erreicht, daß die Oberflächen der Produkte keinen längeren Kontakt mit heißen Gegenständen erhalten, was dazu führt, daß die Oberfläche der Produkte unversehrt bleibt. Hätten die Produkte längeren Kontakt mit heißen Gegenständen, würden die Produkte an den heißen Gegenständen anbacken, wodurch die Oberfläche der Produkte beschädigt würde. Ein Schwebedruck von etwa 10 mbar bis 200 mbar hat sich als sehr vorteilhaft erwiesen. Dieser Druck genügt, um die Produkte in dem heißen Gasstrom zu verwirbeln. Durch die Verwirbelung wird eine gleichmäßige Erwärmung der Oberfläche erreicht.

Die erfindungsgemäße Vorrichtung weist einen Behälter auf, mit wenigstens einer am unteren Ende angeordneten Gas-Einlaßöffnung und wenigstens einer am oberen Ende angeordneten Gas-Auslaßöffnung. Oberhalb der Gas-Auslaßöffnung ist eine Produkt-Einlaßöffnung angeordnet, welche mittels eines Einlaßschiebers verschließbar ist. Unterhalb der Gas-Einlaßöffnung ist eine Produkt-Auslaßöffnung angeordnet, welche mittels eines Auslaßschiebers verschließbar ist. Hierdurch ist gewährleistet, daß das Produkt auf einfache und schnelle Weise durch öffnen des Einlaßschiebers in den Behälter eingebracht werden kann.

Befindet sich das Produkt in dem Behälter, wird die Produkt-Einlaßöffnung mittels des Einlaßschiebers wieder verschlossen. Der Einlaß- und der Auslaßschieber verschließen die Produkt-Einlaßöffnung und -Auslaßöffnung luftdicht. Das durch die Gas-Einlaßöffnung einströmende Gas kann den Behälter nun nur noch durch die Gas-Auslaßöffnung verlassen. Die Gas-Auslaßöffnung beziehungsweise -Einlaßöffnung ist mit einem Gitter oder Sieb abgedeckt. Die Maschen des Siebs sind so groß gewählt, daß das sich im Behälter befindliche Produkt nicht durch die Maschen gelangen kann.

Der Behälter ist so ausgebildet, daß das durch die Gas-Einlaßöffnung strömende Gas das im Behälter befindliche Produkt verwirbelt, bevor es durch die Gas-Auslaßöffnung den Behälter wieder verläßt.

Zur Einstellung des Schwebedrucks sind bei einer besonderen Ausführungsform der Erfindung in der Gaszuführleitung Mittel zur Steuerung des Drucks und der Menge des Gases angeordnet und in der Gas-Ableitung Mittel zur Steuerung der Menge des Gases angeordnet. Hierdurch kann ein für das Produkt optimaler Schwebedruck auf einfache Art und Weise eingestellt werden.

Nachdem das Produkt im Behälter der Behandlung mit dem heißen Gas für eine bestimmte Zeit unterworfen wurde, werden die Gasleitungen verschlossen und die Produkt-Auslaßöffnung mittels des Auslaßschiebers geöffnet. Unterhalb der Produkt-Auslaßöffnung ist ein Schrägförderer angeordnet, welcher in seinem unteren Trogbereich ein cryogenes Kühlbad hat. Das Produkt gelangt somit nach der Behandlung mit dem heißen Gas in das Kühlbad. Der Schrägförderer ist so ausgebildet, daß das Produkt nach der sekundensschnellen Abkühldauer aus dem Kühlbad entfernt wird.

In vorteilhafter Weise wird der Behälter automatisch mit zu behandelnden Produkten beschickt sowie die behandelten Produkte einer weiteren Verarbeitung zugeführt. Hierdurch ergibt sich ein kontinuierlicher Ablauf der Behandlung von Produkten. Zwar erfolgt die Behandlung der Produkte mit heißem Gas und die Abkühlung der Produkte chargenweise, jedoch kann das Umfeld um die erfindungsgemäße Vorrichtung so ausgebildet werden, daß der Gesamtprozeß kontinuierlich verläuft.

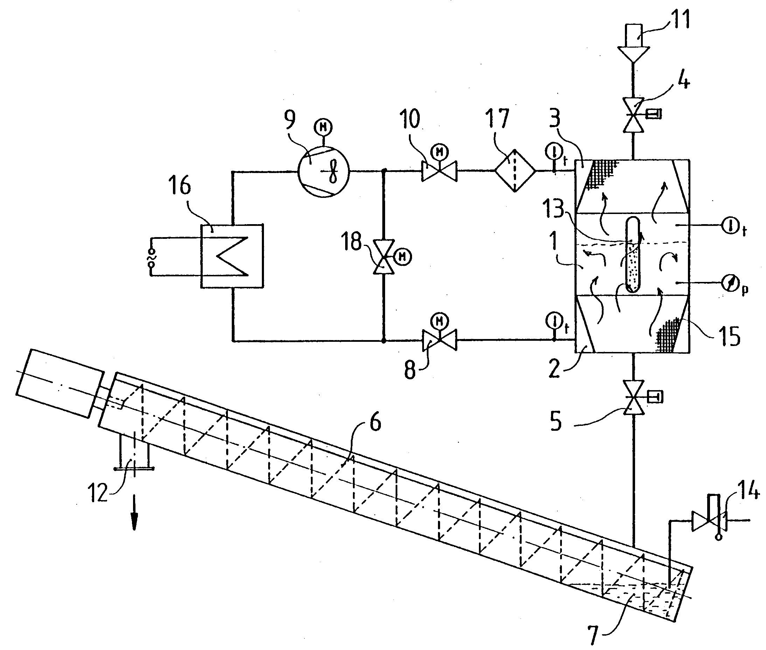

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Fig. eine schematische Anordnung einer erfindungsgemäßen Vorrichtung.

Ein Behälter 1 weist an seinem unteren Ende Gas-Zuführöffnungen auf, welche ringförmig um den Behälter angeordnet sind. Der Behälter 1 weist im Bereich der Ringleitung 2 einen als Kegelstumpf ausgebildeten siebförmigen Einsatz 15 auf. Das aus den Zuführöffnungen ausströmende Gas der Ringleitung 2 strömt durch den siebförmigen Einsatz 15 und erfaßt das darin befindliche Produkt.

Unterhalb der Gas-Zuführleitung 2 befindet sich eine Produkt-Auslaßöffnung, welche mittels eines Auslaßschiebers 5 verschließbar ist. Im oberen Bereich des Behälters 1 befinden sich Gas-Auslaßöffnungen 3, welche ebenfalls ringförmig um den Behälter angeordnet sind. Oberhalb der Gas-Auslaßöffnung 3 befindet sich eine Produkt-Einlaßöffnung, welche mittels eines Einlaßschiebers 4 verschließbar ist. Oberhalb des Einlaßschiebers 4 ist ein Trichter 11 angeordnet, in welchen kontinuierlich zu behandelndes Gut eingefüllt werden kann. In der Zuführleitung der Gas-Einlaßöffnungen 2 befindet sich ein Ventil 8, mittels dem die Gasmenge eingestellt werden kann. In der mit den Gas-Auslaßöffnungen 3 verbundenen Gas-Ableitung befindet sich ein Ventil 10, mittels welchem die Menge des abgeleiteten Gases eingestellt werden kann. Die Gas-Ableitung ist mit einem Erhitzer 16 verbunden, mittels welchem das Gas wieder erhitzt wird, bevor es wieder dem Behälter 1 zugeführt wird. Zur Reinigung des Gases ist in der Ableitung ein Filter 17 vorgesehen. Der Gasstrom wird mittels eines drehzahlgeregelten Ventilators 9 durch die Gasleitungen getrieben. Mittels der Ventile 8 und 10 und des drehzahlregelbaren Ventilators 9 kann der im Behälter 1 vorhandene Druck eingestellt werden. Je nach zu behandelndem Gut wird ein entsprechender Schwebedruck eingestellt. Zur Beobachtung des in den Behälter 1 eingebrachten Produkts weist der Behälter 1 ein Sichtfenster 13 auf.

Unterhalb der Produkt-Auslaßöffnung ist ein Schrägförderer 6 angeordnet, welcher im unteren Trogbereich ein Kühlbad 7 hat. Für das Kühlbad 7 kann in vorteilhafter Weise flüssiger Stickstoff oder flüssiges Kohlendioxid verwendet werden. Die Größe des Kühlbads 7 wird mit einem Niveauwächter 14 überwacht.

Im oberen Bereich des Schrägförderers 6 ist eine Auslaßöffnung 12 angeordnet, durch die das vom Schrägförderer geförderte Gut aus dem Schrägförderer 6 entfernt werden kann.

Wird der Einlaßschieber 4 geöffnet, gelangt durch die Produkt-Einlaßöffnung sich im Trichter 11 befindliches Produkt in den Behälter 1. Der Einlaßschieber 4 wird soweit beziehungsweise solange geöffnet, bis eine vorbestimmte Menge im Behälter 1 vorhanden ist. Ist die vorbestimmte Menge erreicht, wird der Einlaßschieber 4 wieder geschlossen. Nachdem der Einlaßschieber 4 geschlossen ist, wird durch die Gas-Einlaßöffnungen 2 Gas in den Behälter 1 geleitet. Das Gas verläßt den Behälter wieder über die Gas-Auslaßöffnungen 3. Durch den Gasstrom wird das sich im Behälter 1 befindliche Produkt erfaßt und verwirbelt. Damit das Produkt nicht durch die Gas-Einlaß- beziehungsweise -Auslaßöffnung den Behälter verlassen kann, sind in den Öffnungen Siebe angebracht. Je nach Produkt muß im Behälter 1 ein bestimmter Schwebedruck vorhanden sein. Der Schwebedruck wird durch die Ventile 8 und 10 beziehungsweise durch den drehzahlregelbaren Ventilator 9 eingestellt.

Nachdem das sich im Behälter 1 befindliche Produkt eine vorbestimmte Zeit behandelt worden ist, wird der Gasstrom abgestellt. Hierdurch senkt sich das Produkt auf den Behälterboden ab. Beim Öffnen des Auslaßschiebers 5 fällt das Produkt durch die Produkt-Auslaßöffnung in das Kühlbad 7 des Schrägförderers 6. Befindet sich kein Produkt mehr im Behälter 1, wird der Auslaßschieber 5 wieder verschlossen, und der Prozeß beginnt von vorne.

Während der Befüllung des Behälters 1 mit einem Produkt wird die Gas-Zuführleitung sowie die Gas-Ableitung mittels der Ventile 8 und 10 verschlossen. Damit das Gas nicht im Erhitzer 16 stehenbleibt, wodurch es auf unzulässige Temperaturen erhöht werden könnte, ist der Behälter 1 mittels einer Querleitung überbrückt, welche während des normalen Betriebs mittels eines Ventils 18 verschlossen ist. Erst wenn die Ventile 8 und 10 geschlossen sind, wird das Ventil 18 geöffnet, wodurch für das Gas über die Querleitung ein verkürzter Kreislauf geschaffen ist. Während der Beschickung des Behälters 1 kann somit das Gas weiter durch den Erhitzer 16 getrieben werden.

Zur Überwachung der Temperatur und des Drucks im Behälter 1 sind Temperaturwächter und Druckwächter vorgesehen. Ebenso sind in der Gas-Zuführleitung und in der Gas-Ableitung Temperaturwächter vorgesehen.

Nach einer Abkühldauer von wenigen Sekunden wird das sich im Kühlbad 7 befindliche Produkt durch den Schrägförderer 6 aus dem Kühlbad 7 entfernt. Das Produkt wird bis zur Auslaßöffnung 12 gefördert, wo es den Schrägförderer 6 wieder verläßt. An die Auslaßöffnung 12 kann sich eine Vorrichtung anschließen, mittels der das entkeimte Produkt weiterbehandelt wird. Der Inhalt des Kühlbads 7 wird durch einen Niveauregler 14 eingestellt.

## Patentansprüche

1. Verfahren zum Entkeimen von getrockneten pflanzlichen Produkten,
dadurch gekennzeichnet,
daß die Produkte für etwa eine halbe Minute bis drei Minuten in einen Gasstrom eingebracht werden, dessen Temperatur etwa 80 bis 170°C beträgt, und die Produkte anschließend in weniger als einer Minute auf mindestens Raumtemperatur abgekühlt werden.

2. Verfahren nach Anspruch 1,
dadurch gekennzeichnet,
daß der Gasstrom Heißluft oder ein Inert-Gas ist.

3. Verfahren nach einem der
Ansprüche 1 bis 2,
dadurch gekennzeichnet,
daß die Einleitung des heißen Gasstroms über eine ringförmig ausgebildete Zuführöffnung (2) durch einen vorgeschalteten Siebkegel (15) erfolgt.

4. Verfahren nach Anspruch 1 bis 3,
dadurch gekennzeichnet,
daß die Produkte sich freischwebend im Gasstrom befinden.

5. Verfahren nach Anspruch 4,
dadurch gekennzeichnet,
daß der Schwebedruck etwa 10 mbar bis 200 mbar beträgt.

6. Verfahren nach einem der
Ansprüche 1 bis 5,
dadurch gekennzeichnet,
daß die noch warme Abluft beziehungsweise das noch warme Inertgas im Kreislauf durch einen Erhitzer (16) geführt wird.

7. Vorrichtung nach einem
der Ansprüche 1 bis 6,
dadurch gekennzeichnet,
daß die Abkühlung der Produkte mittels eines Cryogen-Kühlbades erfolgt.

8. Verfahren nach einem der
Ansprüche 1 bis 7,
dadurch gekennzeichnet,
daß die Verweildauer der Produkte in dem Gasstrom und in dem Kühlbad produktabhängig ist.

9. Vorrichtung zur Durchführung des Verfahrens
nach einem der Ansprüche 1 bis 8,
dadurch gekennzeichnet,
daß ein Behälter (1) vorgesehen ist, mit wenigstens einer am unteren Ende angeordneten Gas-Einlaßöffnung (2) und wenigstens einer am oberen Ende angeordneten Gas-Auslaßöffnung (3), und einer oberhalb der Gas-Auslaßöffnung (3) angeordneten Produkt-Einlaßöffnung, welche mittels eines Einlaßschiebers (4) verschließbar ist, und einer unterhalb der Gas-Einlaßöffnung (2) angeordneten Produkt-Auslaßöffnung, welche mittels eines Auslaßschiebers (5) verschließbar ist, wobei die Produkt-Auslaßöffnung mit einem Schrägförderer (6) verbunden ist, welcher in seinem unteren Trogbereich ein cryogenes Kühlbad (7) hat.

10. Vorrichtung nach Anspruch 9,
dadurch gekennzeichnet,
daß die Gas-Einlaßöffnung (2) mittels einer Vorrichtung (8, 9) zur Steuerung des Drucks und der Menge mit einer Gaszuführleitung verbunden ist, und die Gas-Auslaßöffnung (3) mittels einer Vorrichtung (10) zur Steuerung der Menge mit einer Gas-Ableitung verbunden ist.

11. Vorrichtung nach Anspruch 9 oder 10,
dadurch gekennzeichnet,
daß Mittel vorgesehen sind, welche die Vorrichtung zur Durchführung des Entkeimungsverfahrens mit Produkten beschicken und die entkeimten Produkte einer weiteren Verarbeitung zuführen.

12. Vorrichtung nach Anspruch 11,
dadurch gekennzeichnet,
daß eine Steuerung vorgesehen ist, mittels welcher die Beschickung der Vorrichtung und die Zuführung der entkeimten Produkte zur Weiterverarbeitung gesteuert wird.

13. Vorrichtung nach einem der
Ansprüche 9 bis 12,
dadurch gekennzeichnet,
daß ein Filter (17) vorgesehen ist, mittels dem das Gas gereinigt wird.
